# NEUE EUROPÄISCHE PATENTSCHRIFT

(11) **EP 3 026 293 B2**
(45) Veröffentlichungstag und Bekanntmachung des Hinweises auf die Entscheidung über den Einspruch: **09.10.2024**
(45) Hinweis auf die Patenterteilung: 24.04.2019
(21) Anmeldenummer: 15191815.8
(22) Anmeldetag: 28.10.2015
(51) Int. Cl.: F16F 15/123

(54) **FEDERPAKET**
SPRING PACKAGE
ENSEMBLE DE RESSORTS

(30) Priorität: 28.11.2014 DE 102014224436
(43) Veröffentlichungstag der Anmeldung: 01.06.2016
(73) Patentinhaber: ZF Friedrichshafen AG, 88046 Friedrichshafen (DE)
(72) Erfinder: Seemann, Frank, 97502 Euerbach (DE); Kubisch, Andreas, 97502 Euerbach (DE)
(74) Vertreter: ZF Friedrichshafen AG

(56) Entgegenhaltungen:
- DE-A1- 102008 054 190
- DE-A1- 4 416 012
- US-A1- 2012 077 605

## Beschreibung

Die Erfindung betrifft ein Federpaket gemäß dem Oberbegriff des Patentanspruchs 1, sowie einen Torsionsdämpfer mit einem derartigen Federpaket.

Ein gattungsgemäßes Federpaket ist in der WO 2006 / 035 173 A1 gezeigt. Dabei umfasst das Federpaket zwei Abstützelemente sowie drei koaxial ineinander angeordnete Schraubenfedern. Die Schraubenfedern weisen hierbei jeweils unterschiedliche Längen, Durchmesser und Drahtdurchmesser auf. Die Abstützelemente bilden weiterhin einen Scheibenabschnitt, einen Gelenkabschnitt sowie einen Stufenabschnitt aus, wobei die Enden der Schraubenfedern an einer jeweiligen Stufe des Stufenabschnitts angeordnet sind. Die Anordnung der Schraubenfedern an den Abstützelementen in lateraler Richtung ist dabei durch Zwischenflächen vorgegeben und eingeschränkt, wobei die Zwischenflächen zwischen den einzelnen Stufen angeordnet sind und den axialen Versatz der Stufen erzeugen. Die Schraubenfedern können sich daher im Betrieb in beschränktem Umfang lateral gegenüber dem Abstützelement bewegen, wodurch die Reibung des Federpakets sowie der Verschleiß des Federpakets erhöht ist.

Zudem ist in der DE 10 2008 054 190 A1 ein Federpaket mit zwei Schraubenfedern offenbart. Dabei greift eine letzte Windung der inneren Schraubenfeder in eine kreisförmig umlaufende Aussparung ein, um die Abstützelemente an dem Federpaket zu befestigen. Zudem ist ein radial innerer Endbereich der äußeren Schraubenfeder konisch ausgebildet, der ausschließlich an einem konischen Abschnitt des Abstützelements anliegt.

Es ist von dem Stand der Technik ausgehend Aufgabe ein Federpaket bereitzustellen, bei dem die Positionierung der Schraubenfedern an den Abstützelementen verbessert ist und die Reibung des Federpaket sowie der Verschleiß verringert ist.

Diese Aufgabe wird durch ein Federpaket mit den Merkmalen des Patentanspruchs 1 gelöst. In den abhängigen Ansprüchen sind vorteilhafte Ausführungen der Erfindung beschrieben.

Das Federpaket umfasst daher zumindest eine Schraubenfeder an deren axialen Enden Abstützelemente, auch Federteller genannt, angeordnet sind. An dem Abstützelement sind dabei vorzugsweise ein Scheibenabschnitt, ein Gelenkabschnitt, ein Stufenabschnitt und / oder ein Führungsabschnitt ausgebildet. Der Gelenkabschnitt, der Scheibenabschnitt und der Führungsabschnitt können dabei der Ansteuerung des Federpakets durch Federfenster eines Torsionsdämpfers dienen. Der Stufenabschnitt dient vorzugsweise der Ansteuerung der Schraubenfeder und kann als Ansteuerabschnitt für die Schraubenfeder ausgebildet sein. Dabei ist die Schraubenfeder günstigerweise an einer Stufe des Abstützelements angeordnet. Dabei kann eine in lateraler Richtung ausgebildete Fläche der Stufe als Anlagefläche für eine Ansteuerfläche des Federelements dienen. Zudem kann eine in axialer Richtung ausgebildete Fläche eine laterale Beweglichkeit der Schraubenfeder gegenüber dem Abstützelement begrenzen. Der Scheibenabschnitt, insbesondere der dem Ansteuerabschnitt gegenüberliegende Anteil davon, kann zudem als Abstützabschnitt für ein Funktionselement, insbesondere für ein Eingangselement und / oder ein Ausgangselement eines Torsionsdämpfers, dienen.

An dem Abstützelement, insbesondere an der Stufe des Stufenabschnitts, ist eine erste Zentrierfläche ausgebildet, die mit einer zweiten Zentrierfläche der Schraubenfeder korrespondiert und zusammenwirkt, um die Schraubenfeder an dem Federpaket auszurichten, insbesondere zu zentrieren. Die erste Zentrierfläche ist dabei an einem lateralen Endbereich der Anlagefläche ausgebildet, beispielsweise zwischen der Anlagefläche der Stufe und einer Zwischenfläche.

Im Vergleich mit den bekannten Ausführungen kann eine unerwünschte Beweglichkeit der Schraubenfeder gegenüber dem Abstützelement verringert oder auch vermieden werden. Eine laterale Ausrichtung der Schraubenfeder an dem Abstützelement kann hierdurch weiter verbessert werden. Die erste und die zweite Zentrierfläche sind dabei konisch ausgebildet. Die Zwischenfläche bildet hierbei den axialen Versatz an dem Stufenabschnitt aus.

Die Zentrierflächen sorgen dabei für eine definierte Anordnung der Schraubenfeder an den Abstützelementen des Federpakets. Insbesondere bei Verwendung mehrerer Schraubenfedern können Abstände zwischen den Federelementen, auch während des Betriebs, sicher vorgegeben werden, wodurch insbesondere Verschleiß durch Reiben oder Schaben der Windungen der Schraubenfedern aneinander vermieden werden kann.

Erfindungsgemäß liegt in entspanntem Zustand des Federpakets die zweite Zentrierfläche der Schraubenfeder an der ersten Zentrierfläche der Stufe des Abstützelements an und die Ansteuerfläche der Schraubenfeder und die zugehörige Anlagefläche der Stufe weisen einen axialen Abstand auf.

Die Ausrichtung der Schraubenfeder an dem Abstützelement durch die Zentrierflächen ist hierdurch sichergestellt. In entspanntem Zustand liegen die Schraubenfeder und das Abstützelement kraftfrei, also ohne vorspannende Kräfte, aneinander an.

Günstigerweise liegt in gespanntem Zustand des Federpakets die zweite Zentrierfläche der Schraubenfeder an der ersten Zentrierfläche der Stufe des Abstützelements an und / oder die Ansteuerfläche der Schraubenfeder und die zugehörige Anlagefläche der Stufe liegen aneinander an.

In gespanntem Zustand wirkt effektiv eine axiale Kraft auf die axialen Enden des Federpakets, insbesondere auf die Abstützelemente, wodurch die Federenden der Schraubenfeder an das Abstützelement gedrückt werden. In gespanntem Zustand ist das Federpaket gegenüber dem entspannten Zustand bereits um eine bestimmte Länge komprimiert. Hierdurch kann der bereits oben erwähnte axiale Abstand zwischen der Ansteuerfläche und der Anlagefläche verringert werden, insbesondere verschwinden. Zudem liegen die erste Zentrierfläche und die zweite Zentrierfläche aneinander an. Hierdurch kann eine optimale Krafteinleitung in die Schraubenfeder erreicht werden. Zudem ist die Schraubenfeder fest an dem Abstützelement ausgerichtet, insbesondere in lateraler und in axialer Richtung.

Mit Vorteil ist in gespanntem Zustand des Federpakets eine axiale Endwindung der Schraubenfeder radial gegenüber den anderen Windungen der Schraubenfeder radial aufgeweitet oder radial verringert, insbesondere durch Verformung aufgrund einer, das Federpaket, vorspannenden effektiven Kraft.

Da die Schraubenfeder mit einer Axialkraft gegenüber dem Abstützelement beaufschlagt wird, kann sich das Federende aufgrund der Zentrierflächen, insbesondere konischer Zentrierflächen, radial aufweiten oder radial verringern oder einengen. Dieses radiale aufweiten oder radiale verringern entspricht im Wesentlichen einer Verformung der Schraubenfeder aufgrund der wirkenden effektiven Kraft. Dies kann sich auf die Endwindungen oder die Endwindung des Federelements beschränken. Die laterale Festlegung der Schraubenfeder an dem Abstützelement wird hierdurch nochmals verbessert. Die laterale Verformung der Schraubenfeder ist dabei abhängig von der Ausführung der Zentrierflächen sowie der Schraubenfeder und dem Abstützelement. Die Schraubenfeder kann zudem auch derart ausgebildet sein, dass deren Endwindung bereits radial voraufgeweitet oder radial voreingeengt ist, insbesondere bei einer nicht vorhandenen effektiven Kraft.

In einer Ausführungsvariante sind an dem Federpaket zumindest zwei Schraubenfedern ausgebildet, die radial oder koaxial ineinander angeordnet, wobei die radial innere Schraubenfeder in einer Vertiefung oder Ausnehmung des Abstützelements angeordnet ist.

Durch die Verwendung mehrerer Schraubenfedern an einem Federpaket kann bei unveränderter Federkraft des Federpakets ein längerer Federweg erreicht werden. Alternativ kann bei gleichem Federweg eine höhere Federkraft erreicht werden. Dies ist dadurch begründet, dass bei Verwendung zusätzlicher Schraubenfedern die Drahtstärke der einzelnen Schraubenfedern verringert werden kann, wodurch sich die einzelnen Windungen erst bei längeren Federwegen aneinander anlegen und die Schraubenfeder auf Block geht. Durch die radiale und / oder koaxiale Anordnung der Schraubenfedern ineinander ist eine kompakte Anordnung möglich. Zudem kann eine radial innere Schraubenfeder durch die Anordnung in einer Vertiefung oder einer Ausnehmung an dem Abstützelement, insbesondere an dem Stufenabschnitt, besonders lang ausgebildet werden, wodurch für die innere Schraubenfeder ein langer Federweg und damit auch ein großes Federvolumen bereitgestellt wird.

Die Vertiefung ist günstigerweise mittig oder zentriert an dem Stufenbereich des Abstützelements ausgebildet. Der Stufenabschnitt kann dabei mehrere radial zueinander angeordnete Stufen ausbilden, wobei vorzugsweise die innerste Stufe durch die Vertiefung ausgebildet ist. Diese Vertiefung ist besonders bei Verwendung von drei Federelementen von Vorteil, da die innere Schraubenfeder länger ausgebildet werden kann als zumindest eine weitere Schraubenfeder. Bei Verwendung eines derartigen Federpakets mit drei Schraubenfedern in einem Torsionsdämpfer kann eine Verdrehsteifigkeit um etwa 10% verringert werden.

Mit besonderem Vorteil ist die radial innerste Schraubenfeder gleich lang oder länger als eine weitere Schraubenfeder des Federpakets ausgebildet.

Wie bereits oben erwähnt, kann durch eine lang ausgebildete radial innere Schraubenfeder eine Verdrehsteifigkeit eines Torsionsdämpfer mit einem solchen Federpaket weiter verringert werden. Die radial innerste Schraubenfeder, die in der Vertiefung angeordnet sein kann, ist dabei günstigerweise gleich lang oder länger ausgebildet als die radial äußerste Schraubenfeder. Bei der Verwendung des Stufenabschnitts an dem Abstützelement zur Ansteuerung der Schraubenfedern ist es üblich, dass sich die Federlänge von den radial außenliegenden Schraubenfedern zu den radial innenliegenden Schraubenfedern verkürzt. Die Vertiefung ermöglicht es allerdings innere Schraubenfedern relativ lang auszubilden.

In einer Ausführungsvariante ist eine Zwischenfläche, die zwischen zwei Anlageflächen angeordnet ist und einen axialen Versatz der Stufen ausbildet, konisch ausgebildet.

Durch die konische Ausführung der Zwischenfläche kann ein Reiben der Schraubenfeder an der Zwischenfläche nochmals weiter reduziert oder sogar verhindert werden. Derartiges Reiben entsteht insbesondere dann, wenn eine Bewegungsfreiheit des Federpakets, insbesondere der Abstützelemente eingeschränkt ist. Ein Winkel der konisch ausgeführten Zwischenfläche steht daher günstigerweise in Zusammenhang mit der Einschränkung der Bewegungsfreiheit der Abstützelemente. Dies wird in der Figurenbeschreibung nochmals ausführlicher erläutert.

Es wird weiter ein Torsionsdämpfer gemäß den Merkmalen des Patentanspruchs 8-7 vorgeschlagen, der ein Federpaket nach zumindest einer der obigen Ausführungen oder nach einem der Ansprüche 1 bis 6 umfasst.

Der Torsionsdämpfer wird günstigerweise in einer Kupplungsscheibe verwendet und kann entsprechend den bekannten Ausführungen ausgebildet sein. Dabei umfasst der Torsionsdämpfer günstigerweise ein scheibenförmiges Eingangselement und ein scheibenförmiges Ausgangselement, die drehbar zueinander um eine Rotationsachse angeordnet sind. Das Eingangselement und das Ausgangselement sind dabei günstigerweise über zumindest ein Federpaket miteinander wirkverbunden, wobei das Federpaket günstigerweise in Federfenstern des Eingangselements und des Ausgangselements angeordnet ist. Das Federpaket ist dabei mit Vorzug gemäß zumindest einer der vorigen Ausführungen ausgebildet.

Wie bereits erwähnt, kann hierdurch der Verschleiß der Federpakete verringert werden und die Effizienz verbessert werden. Zudem kann durch die Verringerung der Verdrehsteifigkeit des Torsionsdämpfers entweder ein größeres Motormoment übertragen oder eine Drehentkopplung zwischen einem Motor und einem Antriebsstrang verbessert werden.

Torsionsdämpfer nach Anspruch 8, dadurch gekennzeichnet, dass das Federpaket vorgespannt in Federfenstern des Eingangselement und des Ausgangselements angeordnet ist.

Durch die Vorspannung des Federpakets, beispielsweise um 1 bis 5 mm Federweg, sind die Schraubenfedern zentriert und fest an dem Federpaket angeordnet. Diese definierte Anordnung der Schraubenfedern untereinander und gegenüber dem Abstützelement ist daher auch bei 0° Relativdrehwinkel zwischen dem Eingangselement und dem Ausgangselement gegeben. Zudem bleibt das Federpaket bei einem Überdrehen von 0° Relativdrehwinkel fest in seiner definierten Position, wobei insbesondere die Anordnung der Schraubenfedern untereinander dauerhaft festgelegt ist und unverändert bleibt.

In einer weiteren vorteilhaften Ausführungsvariante sind bis zum Erreichen eines definierten Relativdrehwinkels zwischen dem Eingangselement und dem Ausgangselement radial innenliegende Windungsanteile stärker gespannt als radial außenliegende Windungsanteile der Schraubenfeder.

Dabei kann ein radial innenliegender Bereich einer Endwindung der Schraubenfeder an dem Abstützelement in Anlagekontakt anliegen, wobei ein radial außenliegender Anteil der Endwindung der Schraubenfeder von dem Abstützelement axial beabstandet ist, insbesondere die Ansteuerfläche der Schraubenfeder von der Anlagefläche des Abstützelements beabstandet ist. Radial innen- und außenliegende Bereiche beziehen sich hierbei auf die Ausdehnungen des Torsionsdämpfers und nicht auf die des Federpakets selbst. Durch die Vorspannung der radial innenliegenden Windungsanteile sind die Schraubenfedern fest an dem Federpaket positioniert und ebenso gegeneinander ausgerichtet. Zudem wird bei geringen Relativdrehwinkeln des Torsionsdämpfers eine sehr flache, langsam ansteigende Kennlinie erreicht. Dabei wirken zunächst nur die radial innenliegenden Windungsanteile der Schraubenfedern, deren effektiver Wirkradius einen geringen Abstand zur Drehachse des Torsionsdämpfers bildet. Die radial außenliegenden Windungsanteile können als zumindest teilweise entlastet betrachtet werden. Mit steigendem Relativdrehwinkel des Torsionsdämpfers legen sich die Endwindungen der Schraubenfedern, insbesondere deren radial außenliegenden Bereiche der Windungsenden, an den Abstützelementen an, wodurch die Schraubenfedern gleichmäßig belastet sind. Dabei verschiebt sich der effektiver Wirkradius des Federpakets radial nach außen.

Eine derartige Ansteuerung der Schraubenfedern kann beispielsweise durch eine bestimmte Ausbildung der Federfenster des Torsionsdämpfers und des Abstützelements erreicht werden, welche in der Figurenbeschreibung ausführlicher erläutert wird.

Es wird daher vorgeschlagen, dass bis zum Erreichen eines definierten Relativdrehwinkels zwischen dem Eingangselement und dem Ausgangselement radial innenliegende Bereiche der Ansteuerfläche der Schraubenfeder und der Anlagefläche des Abstützelements in Anlagekontakt stehen und radial außenliegende Bereiche der Ansteuerfläche der Feder und der Anlagefläche des Abstützelements voneinander beabstandet sind.

Hierzu können die zuvor erläuterten Ausführungen herangezogen werden.

Das erfindungsgemäße Federpaket und der erfindungsgemäße Torsionsdämpfer werden im Folgenden anhand der beigefügten Figuren beispielhaft erläutert. Hierbei zeigen:
- Fig. 1: ein Federpaket mit Schraubenfedern und einem Abstützelement;
- Fig. 2: ein vergrößerte Teilansicht des Federpakets aus Fig. 1;
- Fig. 3: eine perspektivische Ansicht des Abstützelements aus Fig. 1;
- Fig. 4: eine weitere perspektivische Ansicht des Abstützelements aus Fig. 1;
- Fig. 5: eine weitere Ansicht des Abstützelements aus Fig. 1;
- Fig. 6: eine Teildarstellung einer Kupplungsscheibe mit einem Torsionsdämp-fer und Federpaketen;
- Fig. 7: eine Schnittansicht der Kupplungsscheibe aus Fig. 6;
- Fig. 8: eine Schnittansicht des Torsionsdämpfer aus Fig. 6;
- Fig. 9: einen vergrößerten Ausschnitt des Torsionsdämpfers aus Fig. 8.

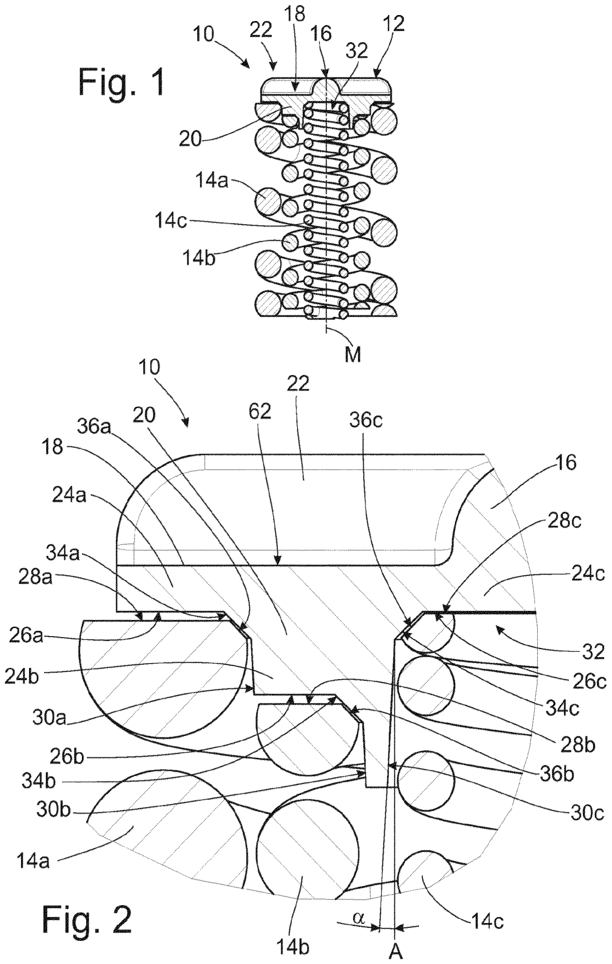

In den Fig. 1 und Fig. 2 ist ein Federpaket 10 dargestellt, welches zwei Abstützelemente 12 sowie drei Schraubenfedern 14 umfasst. Hierbei ist jedoch nur eines der Abstützelemente 12 dargestellt. Die Schraubenfedern 14 sind dabei koaxial bzw. radial ineinander als äußere oder erste Schraubenfeder 14a, als mittlere oder zweite Schraubenfeder 14b und als innere oder dritte Schraubenfeder 14c angeordnet. Dabei sind die Schraubenfedern 14 mit deren axialen Endwindungen an den Abstützelementen 12 angeordnet.

Das Abstützelement 12 bildet hierbei einen Gelenkabschnitt 16, einen Scheibenabschnitt 18, einen Stufenabschnitt 20 und einen Führungsabschnitt 22 aus. Dabei sind an dem Stufenabschnitt 20 des Abstützelements 12 mehrere Stufen 24 ausgeführt. Eine erste Stufe 24a ist dabei radial außen, eine zweite Stufe 24b in der Mitte und eine dritte Stufe 24c radial innen an dem Abstützelement 12 angeordnet. Die radiale Anordnung der Stufen 24 entspricht hierbei der radialen Anordnung der Schraubenfedern 14. Dabei ist die erste Schraubenfeder 14a der ersten Stufe 24a, die zweite Schraubenfeder 14b der zweiten Stufe 24b und die dritte Schraubenfeder 14c der dritten Stufe 24c zugeordnet. Die Stufen 24 weisen hierbei Anlageflächen 26 auf, die Ansteuerflächen 28 der Schraubenfedern 14 zugeordnet sind. Man erkennt, dass die Stufen 24 des Stufenabschnitts 20 sowie die zugehörigen Flächen und Ausgestaltungen im Wesentlichen kreisförmig, ringförmig oder zylinderförmig ausgebildet sind.

Zum Erhalt eines axialen Versatzes der Anlageflächen 26 sind an dem Stufenabschnitt 20 Zwischenflächen 30 ausgebildet, die radial zwischen je zwei Anlageflächen 26 angeordnet sind. Eine erste Zwischenfläche 30a ist dabei zwischen der ersten Anlagefläche 26a und der zweiten Anlagefläche 26b ausgebildet, wobei die erste Zwischenfläche 30a der ersten Schraubenfedern 14a zugeordnet ist. Die zweite und die dritte Zwischenfläche 30b, 30c sind beide zwischen der zweiten Anlagefläche 26b und der dritten Anlagefläche 26c angeordnet. Dabei ist die zweite Zwischenfläche 30b der zweiten Schraubenfeder 14b zugewiesen, wohingegen die dritte Zwischenfläche 30c der dritten Schraubenfeder 14c zugewiesen ist. Die Zwischenflächen 30 vereinfachen den Zusammenbau des Federpakets und können unter anderem der Führung der Schraubenfedern dienen, insbesondere wenn die Abstützelemente 12 gegeneinander verkippen. Dies wird im Folgenden noch ausführlicher ausgeführt. Eine Zwischenfläche 30 ist axial günstigerweise in etwa halb so lang ausgebildet wie die Drahtdicke oder auch Windungsdicke der zugehörigen Schraubenfeder 14. Die Zwischenflächen 30 können allerdings auch entsprechend länger oder kürzer ausgebildet sein. Die innere Zwischenfläche 30c ist, bedingt durch die Stufenform, die Zwischenfläche 30b und die Vertiefung 32, entsprechend länger ausgeführt.

Die Zwischenflächen 30 sind hierbei zudem konisch ausgebildet. Dies verringert ein Reiben oder ein Schaben der Schraubenfedern 14 an den Zwischenflächen 30. Gegebenenfalls kann sogar ein Kontakt vermieden werden. Ein Verschleiß wird hierdurch reduziert. Ein derartiges Reiben kann beispielsweise bei Verkippen der Abstützelemente 12 zueinander auftreten. Die Zwischenflächen 30 sind hier um einen Winkel α gegenüber einer Axialrichtung A des Federpakets 10 konisch ausgeführt. Die Axialrichtung A ist dabei parallel zu einer Mittelachse M des Federpakets, die sich entlang der einer Axialrichtung der Schraubenfedern 14 oder von einem der Abstützelemente 12 zu dem anderen Abstützelement 12 erstreckt. Dabei verläuft die Mittelachse M mittig an oder koaxial zu dem Federpaket 10, insbesondere koaxial zu den Schraubenfedern 14. Der Radius der Zwischenflächen 30 nimmt entlang der Mittelachse des Federpakets 10, ausgehend von dem entsprechenden Abstützelement 12, ab oder zu, günstigerweise kontinuierlich, linear oder auf andere Art und Weise. Die Zwischenflächen 30 sind dabei insbesondere gegenüber der Mittelachse M des Abstützelements 12 geneigt oder gekippt. Das erwähnte Verkippen der Abstützelemente 12 zueinander kann bei bestimmten Betriebszuständen des Torsionsdämpfers 40 gewünscht sein, wobei der Winkel α hiervon abhängen kann. Dies wird im Folgenden noch ausführlicher erläutert.

Um ein Federvolumen der inneren Schraubenfedern 14c weiter zu vergrößern, kann diese als Bienenkorbfeder ausgeführt sein. Hierbei können die Windungen, die außerhalb der Vertiefung angeordnet sind, radial gegenüber den Windungen innerhalb der Vertiefung, insbesondere den Endwindungen, aufgeweitet sein. Insbesondere können die Endwindungen der Schraubenfeder einen kleineren Durchmesser aufweisen als die restlichen Windungen.

Die Stufen 24 sind an dem Abstützelement 12 axial versetzt zueinander ausgebildet, wobei die zweite Stufe 24b gegenüber der Stufe 24a erhöht angeordnet ist. In dem Bereich der zweiten Stufe 24b ist das Abstützelement 12 axial dicker ausgeführt. Die Dritte Stufe 24c ist gegenüber der zweiten Stufe 24b jedoch vertieft ausgebildet. Dafür ist an dem Abstützelement 12 insbesondere eine Vertiefung 32 oder eine Ausnehmung 32 ausgeführt. Hierdurch kann die innere Schraubenfeder 14c möglichst lang ausgebildet werden. Dabei ist die innere Schraubenfeder 14c länger als die mittlere Schraubenfeder 14b ausgeführt und länger als die äußere Schraubenfeder 14a. Dadurch wird für die innere Schraubenfeder 14c ein großes Federvolumen erreicht. Die innere Schraubenfeder 14c kann allerdings auch gleich lang oder kürzer als die äußere Schraubenfeder 14a ausgeführt sein.

An dem Stufenabschnitt 18 des Abstützelements 12 sind zudem erste Zentrierflächen 34 ausgebildet, die mit zweiten Zentrierflächen 36 der Schraubenfedern 14 zusammenwirken. Die Zentrierflächen 34, 36 sind dabei als Fasen ausgeführt. Die ersten Zentrierflächen 34 und die zweiten Zentrierflächen 36 korrespondieren miteinander, um eine Ausrichtung oder auch Zentrierung der Schraubenfedern 14 an dem Abstützelement 12 zu erreichen. Dabei sind die Zentrierflächen 34, 36 konisch ausgeführt. An den Schraubenfedern 14 sind die zweiten Zentrierflächen 36 radial innen oder radial außen an den Windungsenden ausgebildet. Die ersten Zentrierflächen 34 sind an dem Abstützelement 12 jeweils zwischen einer Anlagefläche 26 und einer Zwischenfläche 30 angeordnet oder auch radial innen oder radial außen an einer Stufe 24.

Zudem sind der Winkel sowie die Länge der konisch ausgeführten ersten und zweiten Zentrierflächen 34, 36 aufeinander abgestimmt. Hierbei ist die erste Zentrierfläche 34 des Abstützelements 12 günstigerweise gleich lang oder länger als die zweite Zentrierfläche 36 der Schraubenfeder 14. Dabei kann die laterale Ausdehnung der ersten Zentrierfläche 34 typischerweise 10% bis 40% des Drahtdurchmessers der Schraubenfeder 14 entsprechen.

Die ersten und zweiten Zentrierflächen 34 und 36 können dabei derart ausgebildet sein, dass bei kraftloser Anlage der jeweiligen Schraubenfeder 14 an der jeweiligen Stufe 24 ein Anlagekontakt zwischen der ersten und der zweiten Zentrierfläche 34, 36 besteht.

Bei kraftloser Anlage der Schraubenfedern 14 an der jeweiligen Stufe 24 stehen die erste Zentrierfläche 34 und die zweite Zentrierfläche 36 in Anlagekontakt und die jeweilige Anlagefläche 26 weist einen axialen Abstand zu der Ansteuerfläche 26 aufweist. Dies ist in der Fig. 2 dargestellt. Durch Vorspannen oder komprimieren des Federpakets 10 kann sich die Endwindung der jeweiligen Schraubenfeder 14 radial aufweiten oder radial einengen um einen Anlagekontakt der Zwischenflächen 34, 36 sowie der Anlagefläche 24 und der Ansteuerfläche 26 zu erhalten. Hierdurch wird eine Zentrierung und Ausrichtung der Schraubenfedern 14 an dem Abstützelement 12 nochmals verbessert. Es ist grundsätzlich auch möglich, dass die Endwindungen der Schraubenfedern 14 ohne Vorspannung bereits radial eingeengt oder radial aufgeweitet ausgeführt sind.

Die ersten und zweiten Zentrierflächen 34, 36 können grundsätzlich auch nur an einer Teilanzahl korrespondierender Schraubenfedern 14 und Stufen 24 ausgeführt werden. Dabei ist eine derartige Zentrierung besonders an der inneren Schraubenfeder 14c mit Vorteilen verbunden. Hierdurch wird insbesondere ein Kontakt zwischen der inneren Schraubenfeder 14c und der zugehörigen inneren Zwischenfläche 30c vermieden.

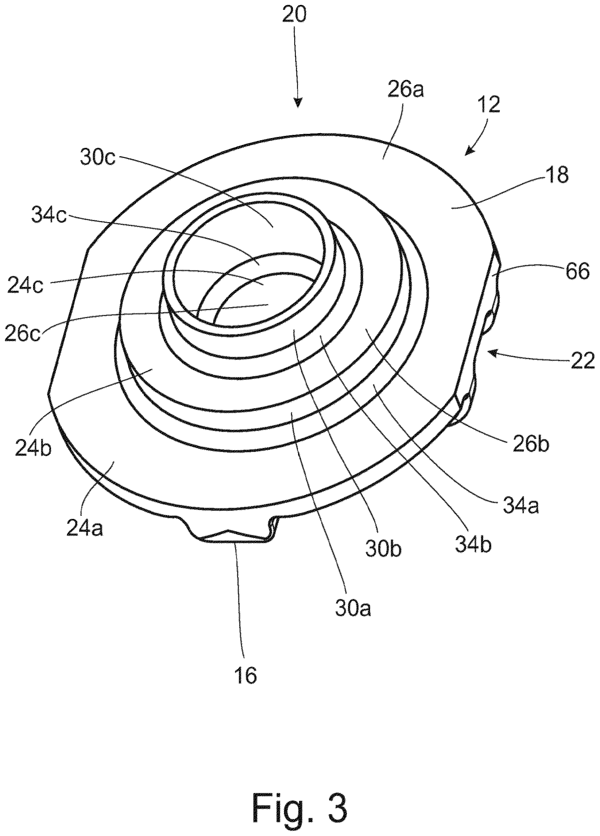

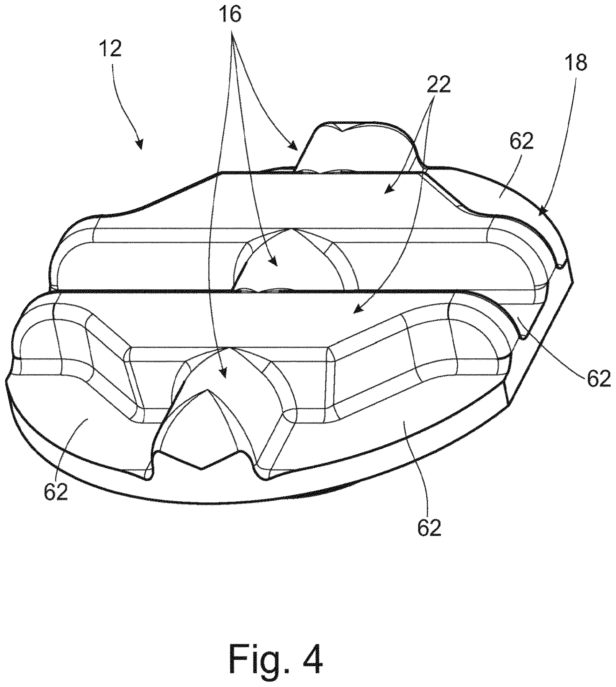

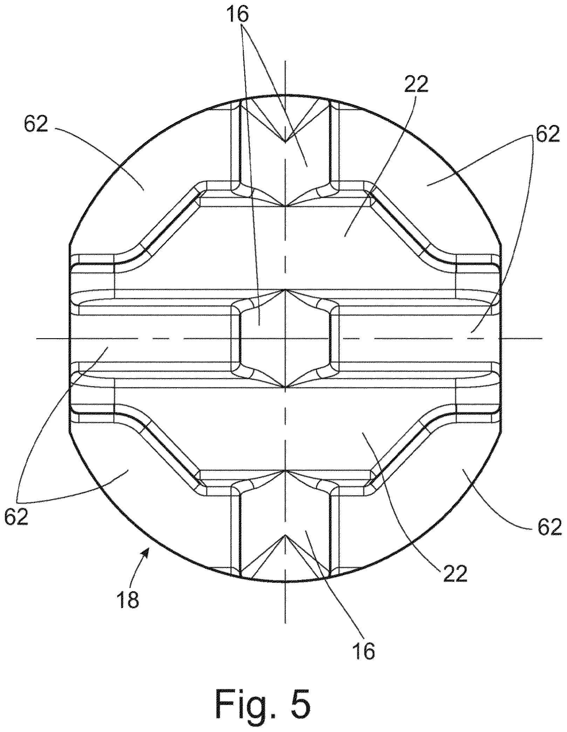

Das Abstützelement 12 ist nochmals genauer in den Fig. 3 - 5 dargestellt. Das Abstützelement 12 ist dabei vorzugsweise als Metallteil oder auch Stahlteil ausgebildet und günstigerweise durch ein kaltfließpressendes Verfahren hergestellt, wobei auch andere Herstellungsmethoden wie beispielsweise sintern oder auch Guss denkbar sind. Man erkennt, dass der Gelenkabschnitt 16 im Wesentlichen durch halbkreisförmige Erhöhungen 16 an dem Abstützelement 12 ausgeführt ist. Dabei ist der Gelenkabschnitt 16 durch den Führungsabschnitt 22 oder auch die Führungsabschnitte 22 in mehrere Bereiche unterteilt. Jeder dieser Bereiche des Gelenkabschnitts 16 kann einer Gelenkaufnahme eines Eingangselements oder eines Ausgangselements eines Torsionsdämpfers zugeordnet und drehbar an diesem angeordnet sein. Weitere Ausführungen hierzu sind im Folgenden zu finden.

Der Führungsabschnitt 22 wird hierbei durch zwei Erhöhungen 22 an dem Abstützelement gebildet. Der Führungsabschnitt 22 greift günstigerweise zwischen den Eingangselementen und Ausgangselementen eines Torsionsdämpfer ein. Hierdurch ist das Federpaket verliersicher an dem Torsionsdämpfer angeordnet, insbesondere wenn das Federpaket vorgespannt an dem Torsionsdämpfer angeordnet ist. Zudem verstärkt der Führungsabschnitt das Abstützelement 12. Ausführungen hierzu werden im Weiteren gemacht.

Die laterale Ausdehnung von Führungsabschnitt 22 und Gelenkabschnitt 16 zueinander sind an der Oberfläche des Scheibenabschnitts 20 senkrecht zueinander ausgebildet.

An dem Abstützelement 12 sind zudem Scheibenflächen 62 ausgebildet, die neben oder zwischen den Erhöhungen 16, 22 des Gelenkabschnitts 16 und des Führungsabschnitts 22 rückseitig des Stufenabschnitts 20 angeordnet sind. Die Scheibenflächen 62 liegen hierbei im Wesentlichen auf einer Ebene. Weitere Ausführungen zur Funktion der Scheibenfläche 62 werden in der weiteren Beschreibung gegeben.

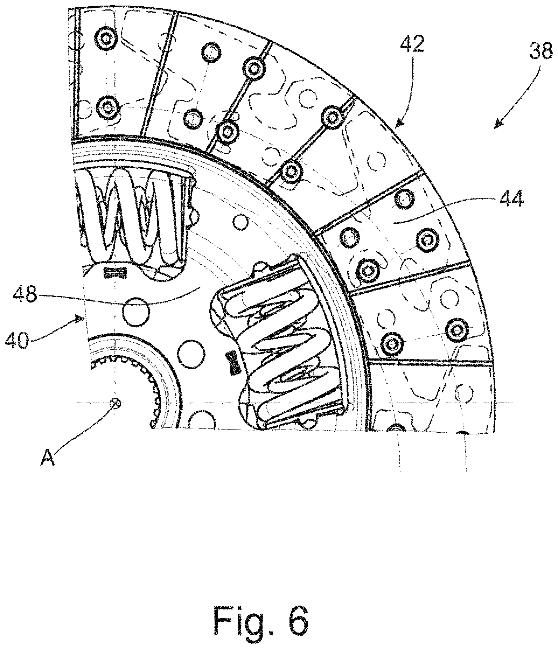

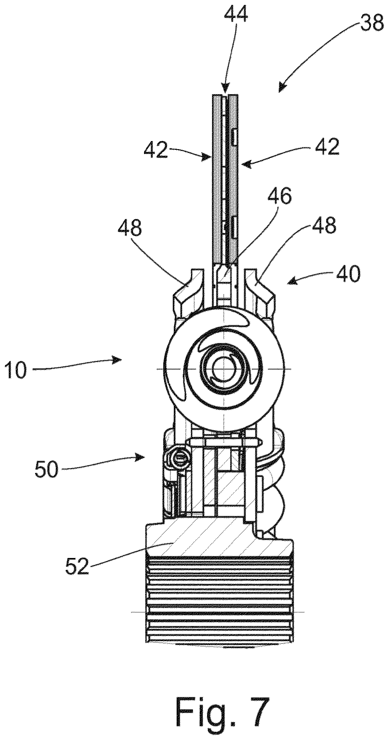

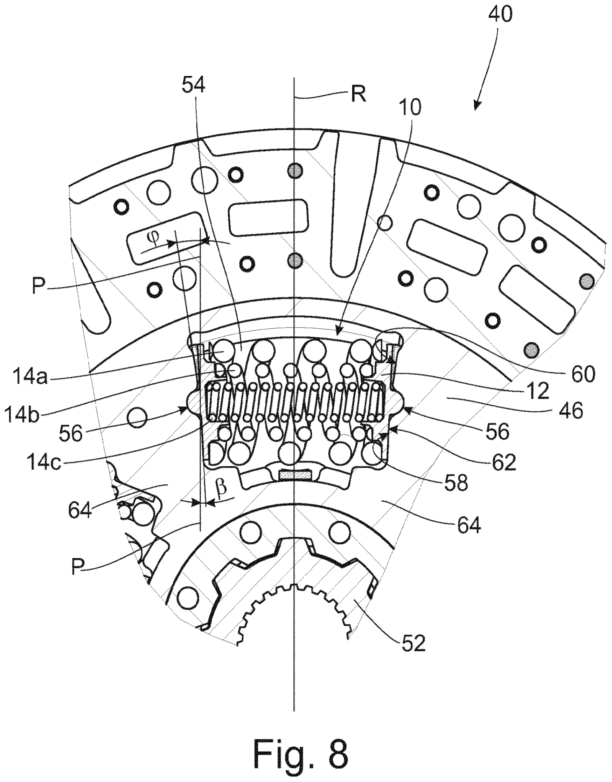

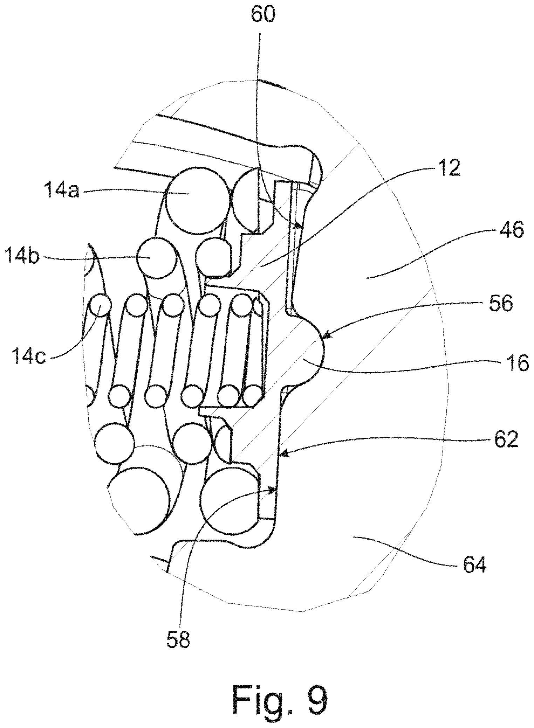

Das Federpaket 10 ist weiter in den Fig. 6 - 9 in Verbindung mit einem Torsionsdämpfer 40 einer Kupplungsscheibe 38 gezeigt. Es ist zu beachten, dass in der Fig. 8 und Fig. 9 die Zentrierflächen 34, 36 nicht dargestellt sind. Die Fig. 6 - 9 und die weiteren Ausführungen gelten allerdings im Besonderen auch für Federpakete, deren Abstützelemente 12 Zentrierflächen 34, 36 aufweisen. Dabei weist die Kupplungsscheibe 38 Reibbeläge 42 auf, die über Belagfedern 44 an einem Eingangselement 46 des Torsionsdämpfers 40 befestigt sind. Das Eingangselement 46 ist weiter über Federpakete 10 mit zwei beidseitig dazu befindlichen Ausgangselementen 48 wirkverbunden. Dabei sind die Ausgangselemente 48 über einen Vordämpfer 50 mit einer Nabe 52 der Kupplungsscheibe 38 wirkverbunden. Die folgenden Ausführungen beziehen sich hauptsächlich auf die Anordnung und Ausführung des Federpakets 10 an dem Torsionsdämpfer 40 sowie auf dessen Funktionsweise.

Es ist zu beachten, dass sich die räumlichen Beziehungen, wie radial, lateral, in Umfangsrichtung usw. im Folgenden nicht mehr auf das Federpaket 10 beziehen, sondern nunmehr auf den Torsionsdämpfer 38.

Zudem sind an dem Abstützelement 10, insbesondere an dem Scheibenabschnitt 18, Abflachungen 66 angeordnet. Dabei liegen sich die beiden Abflachen 66 gegenüber, wodurch ein gerichtetes Einsetzen des Federpakets 10 in die Federfenster eines Torsionsdämpfers ermöglicht wird.

Die Fig. 8 zeigt den Torsionsdämpfer 40 im Radialschnitt. Dabei ist unter anderem das in einem Federfenster 54 des Eingangselements 46 angeordnete Federpaket 10 dargestellt. Die Anordnung des Federpakets 10 in den entsprechenden Federfenstern 54 der Ausgangselemente 48 stimmt mit den nachfolgenden Ausführungen im Wesentlichen übereinstimmen. Das Federpaket ist dabei vorgespannt in dem Federfenster 54 angeordnet. Typische Vorspannlängen der Schraubenfedern 14 können zwischen 1 bis 5 mm liegen.

Dabei weisen die Federfenster 54 an deren umfangseitigen Fensterflächen, an denen die Abstützelemente 12 des jeweiligen Federpakets 10 angeordnet ist, Gelenkaufnahmen 56 auf. In diese Gelenkaufnahmen 56 greift der Gelenkabschnitt 16 des jeweiligen Abstützelements 12 ein. Das Abstützelement 12 ist dabei im Wesentlichen über den Gelenkabschnitt 16 formschlüssig an dem Federfester 54 angeordnet und kann sich über den Gelenkabschnitt um einen Drehpunkt der Gelenkaufnahme 56 drehen. Ein Verdrehen des Abstützelements 12 an dem Federfenster 54 ist hierbei über eine innere oder erste Fensterfläche 58 und eine äußere oder zweite Fensterfläche 60 des Eingangselements 46 sowie eine Scheibenfläche 62 des Abstützelements 12 begrenzt. In der Fig. 9 ist die Anordnung des Abstützelements an den Federfenstern 54 aus Fig. 8 vergrößert dargestellt.

Die erste oder auch innere Fensterfläche 58 ist gegenüber einer Linie P, Parallele, um einen Winkel β verkippt, wobei die Linie P parallel zu einer radial verlaufenden Line R, Radiale, verläuft. Die radiale Linie R verläuft hierbei mittig durch das entsprechende Federfenster 54. Hierdurch ist ein Steg 64 des Eingangselements 46 verbreitert. Dieser Steg 64 bestimmt einen Abstand zwischen zwei benachbarten Federfenstern 54. Die Verbreiterung erhöht daher die Stabilität und Widerstandsfähigkeit des Eingangselements 46 und der Ausgangselemente 48. Zudem kann eine vorteilhafte Ansteuerung des Federpakets erreicht werden. In der Fig. 8 erkennt man, dass die radial innenliegende Bereiche der Federenden der Schraubenfedern 14 mit den Abstützelementen 12 in Anlagekontakt stehen, wohingegen radial außenliegende Bereiche der Federenden der Schraubenfeder 14 axial beabstandet zu den Abstützelementen 12 sind. Mit anderen Worten sind radial innenliegende Bereiche der Ansteuerflächen 28 zu deren korrespondierenden Bereichen der Anlageflächen 26 in Anlagekontakt, während radial außenliegende Bereiche der Ansteuerflächen 28 mit deren korrespondieren Bereichen der Anlageflächen 26 in Umfangsrichtung einen Abstand aufweisen. Zudem sind die Schraubenfedern 14 in dem radial inneren Bereich des Torsionsdämpfers 40 stärker komprimiert oder beansprucht als in dem radial äußeren Bereich des Torsionsdämpfers 40.

Hierdurch ist eine Kennlinie des Torsionsdämpfers 40 bei geringen Relativdrehwinkeln zwischen dem Eingangselement 46 und den Ausgangselementen 48 sehr weich. Dies bietet unter anderem Vorteile bei der Entkopplung von Drehschwingungen. Mit steigendem Relativdrehwinkel, insbesondere ab doppeltem Winkel β, legen sich die Federenden vollständig an den Abstützelementen 12 an, wodurch die Federelemente 14 gleichmäßig belastet werden. Ein typischer Wert für den Winkel β kann zwischen 1° - 5° liegen. Mit Vorteil ist der Winkel α zumindest gleich groß oder größer als der Winkel β ausgebildet. Durch die Ausbildung der inneren Fensterflächen 58 ist die Bewegungsfreiheit des Federpakets 10, insbesondere der Abstützelemente 12, eingeschränkt. Hierdurch kann sich ein Verkippen der Abstützelemente 12 zueinander ergeben.

Bei einer derartigen Ausführung der Federfenster 54 kann ein Federpaket 10 ebenfalls vorgespannt in den Torsionsdämpfer 40 eingebaut werden, wobei hier das Federpaket 10 entlang einem radial inneren Bereich der Windungen äußeren Schraubenfeder 14a um etwa 1 - 5 mm vorgespannt sein kann.

Mit steigendem Vedrehwinkel können sich die Scheibenflächen 62 der Abstützelemente 12 von den ersten Fensterflächen 58 abheben. Dies kann beispielsweise bei einem Relativdrehwinkel geschehen, der doppelt so groß ist wie der Winkel β. Die Abstützelemente können sich nun über deren Gelenkabschnitte 16 in den Gelenkaufnahmen 56 drehen, wobei dies unter anderem von dem Relativdrehwinkel zwischen Eingangselement 46 und den Ausgangselementen 48 abhängt.

Die zweite oder auch äußere Fensterfläche 60 ist gegenüber einer Parallele P um einen Winkel ϕ verkippt. Dabei kann die zweite Fensterfläche 60 als Anschlag für die Scheibenfläche 62 dienen. Günstigerweise ist der Winkel ϕ derart groß gewählt, dass die Scheibenfläche 62 nicht in Anlagekontakt mit der zweiten Fensterfläche 60 kommt. Bei einem derartigen Anlagekontakt würden die an dem Torsionsdämpfer 40 radial außenliegenden Windungsanteile der Schraubenfedern 14 bei maximaler Kompression ungleichmäßig stärker belastet werden als die radial innenliegenden Windungsanteile, wodurch ein Verschleiß wesentlich erhöht sein kann. Zudem könnte die Schraubenfeder 14 sich derart verbiegen, dass deren mittlere Federwindungen nach radial innen gedrückt werden bzw. nach radial innen bauchen. Durch den hierdurch erhöhten Verschleiß kann es zu einem frühen Bruch der Schraubenfedern 14 und zu einem Ausfall des Torsionsdämpfers 40 kommen.

Der Winkel ϕ kann typischerweise 6° - 14° entsprechen, wobei der Winkel ϕ günstigerweise größer ist als die Hälfte des maximal möglichen Relativdrehwinkels zwischen dem Eingangselement 46 und den Ausgangselementen 48. Ein maximaler Relativdrehwinkel zwischen dem Eingangselement 46 und den Ausgangselementen 48 kann typischerweise zwischen 12° - 28° liegen.

Der Torsionsdämpfer 40 und das Federpaket 10, insbesondere deren Abmessungen, sind dabei vorzugsweise derart aufeinander abgestimmt, dass eine Zwischenfläche 30 des Federpakets bei 0° Relativdrehwinkel in Umfangsrichtung länger ausgeführt ist, als sich ein radial außenliegender Bereich der Endwindung einer Schraubenfeder 14 von der jeweiligen Anlagefläche 26 abheben kann. Die Schraubenfedern sind hierdurch verliersicher an dem Torsionsdämpfer festgelegt. Bei 0° Relativdrehwinkel des Torsionsdämpfers 40 sind die Schraubenfedern 14 unabhängig von dieser konstruktiven Ausführung dennoch fest und mit definierter Position an dem Federpaket 10 eingespannt.

Die Anzahl der Schraubenfedern und der Stufen ist hier beispielhaft gewählt und kann zwei oder mehr Schraubenfedern und Stufen aufweisen. Diese Ausführungsvariante mit drei Schraubenfedern und drei Stufen, wobei die innere Stufe durch eine Vertiefung ausgebildet ist, ist jedoch besonders vorteilhaft.

### Bezugszeichen

- 10: Federpaket
- 12: Abstützelement
- 14: Schraubenfeder
- 14a: äußere / erste Schraubenfeder
- 14b: mittlere / zweite Schraubenfeder
- 14c: innere / dritte Schraubenfeder
- 16: Gelenkabschnitt
- 18: Scheibenabschnitt
- 20: Stufenabschnitt
- 22: Führungsabschnitt
- 24: Stufe
- 24a: äußere / erste Stufe
- 24b: mittlere / zweite Stufe
- 24c: innere / dritte Stufe
- 26: Anlagefläche
- 26a: äußere / erste Anlagefläche
- 26b: mittlere / zweite Anlagefläche
- 26c: innere / dritte Anlagefläche
- 28: Ansteuerfläche
- 28a: äußere / erste Ansteuerfläche
- 28b: mittlere / zweite Ansteuerfläche
- 28c: innere / dritte Ansteuerfläche
- 30,a,b,c: Zwischenfläche
- 32: Vertiefung / Ausnehmung
- 34,a,b,c: erste Zentrierfläche
- 36,a,b,c,: zweite Zentrierfläche
- 38: Kupplungsscheibe
- 40: Torsionsdämpfer
- 42: Reibbelag
- 44: Belagfeder
- 46: Eingangselement
- 48: Ausgangselement
- 50: Vordämpfer
- 52: Nabe
- 54: Federfenster
- 56: Gelenkaufnahme
- 58: innere / erste Fensterfläche
- 60: äußere / zweite Fensterfläche
- 62: Scheibenfläche
- 64: Steg
- 66: Abflachung
- α: Winkel
- β: Winkel
- ϕ: Winkel
- A: Axialrichtung
- M: Mittelachse
- R: Radiale, Linie
- P: Parallele, Linie

## Patentansprüche

1. Federpaket (10) für einen Torsionsdämpfer (40) einer Kupplungsscheibe (38), umfassend
- eine Schraubenfeder (14),
- ein Abstützelement (12), an dem ein Scheibenabschnitt (18) und ein Stufenabschnitt (20) ausgebildet ist,
- wobei an dem Stufenabschnitt (20) eine Stufe (24) zur Ansteuerung der Schraubenfeder (14) ausgebildet ist und
wobei eine Ansteuerfläche (28) der Schraubenfeder (14) einer Anlagefläche (26) der Stufe (24) des Abstützelements (12) zugeordnet ist,
- wobei an der Stufe (24) des Stufenabschnitts (20) eine erste Zentrierfläche (34) ausgebildet ist, welche mit einer zweiten Zentrierfläche (36) der Schraubenfeder (14) zur Zentrierung der Schraubenfeder (14) korrespondiert, wobei die erste Zentrierfläche (34) an einem lateralen Endbereich der Anlagefläche (26) ausgebildet ist
**dadurch gekennzeichnet**, die erste und die zweite Zentrierfläche konisch ausgebildet sind und wobei in entspanntem Zustand des Federpakets (10) die zweite Zentrierfläche (36) der Schraubenfeder (14) an der ersten Zentrierfläche (34) der Stufe (24) des Abstützelements (12) anliegt und die Ansteuerfläche (28) der Schraubenfeder (14) und die zugehörige Anlagefläche (26) der Stufe (24) einen axialen Abstand aufweisen.

2. Federpaket (10) nach Anspruch 1, **dadurch gekennzeichnet, dass** in gespanntem Zustand des Federpakets (10) die zweite Zentrierfläche (36) der Schraubenfeder (14) an der ersten Zentrierfläche (34) der Stufe (24) des Abstützelements (12) anliegt und / oder die Ansteuerfläche (28) der Schraubenfeder (14) und die zugehörige Anlagefläche (26) der Stufe (24) aneinander anliegen.

3. Federpaket (10) nach einem der Ansprüche 1 oder 2, **dadurch gekennzeichnet, dass** in gespanntem Zustand des Federpakets (10) eine axiale Endwindung der Schraubenfeder (14) radial gegenüber den anderen Windungen der Schraubenfeder (14) radial aufgeweitet oder radial verringert ist.

4. Federpaket (10) nach einem der Ansprüche 1 bis 43, **dadurch gekennzeichnet, dass** an dem Federpaket (10) zumindest zwei Schraubenfedern (14) ausgebildet sind, die radial ineinander angeordnet sind, wobei die radial innere Schraubenfeder (14) in einer Vertiefung (32) des Abstützelements (12) angeordnet sind.

5. Federpaket (10) nach einem der Ansprüche 4, **dadurch gekennzeichnet, dass** die radial innere Schraubenfeder (14) gleich lang oder länger ausgebildet ist als eine weitere Schraubenfeder (14) des Federpakets (10).

6. Federpaket (10) nach einem der Ansprüche 4 bis 5, **dadurch gekennzeichnet, dass** eine Zwischenfläche (30), die zwischen zwei Anlageflächen (26) angeordnet ist und einen axialen Versatz der Stufen (24) ausbildet, konisch ausgebildet ist.

7. Torsionsdämpfer (40) für eine Kupplungsscheibe (38), umfassend
- ein Eingangselement (46),
- ein Ausgangselement (48),
- wobei das Eingangselement (46) und das Ausgangselement (48) um eine Rotationsachse drehbar zueinander angeordnet sind und
- wobei das Eingangselement (46) und das Ausgangselement (48) über ein Federpaket (10) miteinander wirkverbunden sind,
**dadurch gekennzeichnet, dass** das Federpaket (10) gemäß einem der Ansprüche 1 bis 6 ausgebildet ist.

8. Torsionsdämpfer (40) nach Anspruch 7, **dadurch gekennzeichnet, dass** das Federpaket (10) vorgespannt in Federfenstern (54) des Eingangselements (46) und des Ausgangselements (48) angeordnet ist.

9. Torsionsdämpfer (40) nach Anspruch 7 oder 8, **dadurch gekennzeichnet, dass** bis zum Erreichen eines definierten Relativdrehwinkels zwischen dem Eingangselement (46) und dem Ausgangselement (48) an dem Torsionsdämpfer (38) radial innenliegende Windungsanteile stärker gespannt sind als radial außenliegend Windungsanteile der Schraubenfeder (14).

10. Torsionsdämpfer (40) nach einem der Ansprüche 7 bis 9, **dadurch gekennzeichnet, dass** bis zum Erreichen eines definierten Relativdrehwinkels zwischen dem Eingangselement (46) und dem Ausgangselement (48) radial innenliegende Bereiche der Ansteuerfläche (28) der Schraubenfeder (14) und der Anlagefläche (26) des Abstützelements (12) in Anlagekontakt stehen und radial außenliegende Bereiche der Ansteuerfläche (28) der Schraubenfeder (14) und der Anlagefläche (26) des Abstützelements (12) voneinander beabstandet sind.

## Claims

1. Spring package (10) for a torsion damper (40) of a clutch disc (38), comprising
- a coil spring (14),
- a support element (12) on which a disc portion (18) and a step portion (20) are formed;
- wherein a step (24) for actuating the coil spring (14) is formed on the step portion (20); and
- wherein an actuating face (28) of the coil spring (14) is assigned to a bearing face (26) of the step (24) of the support element (12),
- wherein a first centring face (34), which communicates with a second centring face (36) of the coil spring (14) to centre the coil spring (14), is formed on the step (24) of the step portion (20), wherein the first centring face (34) is formed on a lateral end region of the bearing face (26),
**characterized in that** the first and the second centring face are conical and wherein, in the relaxed state of the spring package (10), the second centring face (36) of the coil spring (14) bears against the first centring face (34) of the step (24) of the support element (12) and the actuating face (28) of the coil spring (14) and the associated bearing face (26) of the step (24) are at an axial spacing.

2. Spring package (10) according to Claim 1, **characterized in that**, in the tensioned state of the spring package (10), the second centring face (36) of the coil spring (14) bears against the first centring face (34) of the step (24) of the support element (12), and/or the actuating face (28) of the coil spring (14) and the associated bearing face (26) of the step (24) bear against one another.

3. Spring package (10) according to either of Claims 1 and 2, **characterized in that**, in the tensioned state of the spring package (10), an axial end coil of the coil spring (14) is radially widened or radially reduced radially in relation to the other coils of the coil spring (14).

4. Spring package (10) according to one of Claims 1 to 3, **characterized in that** at least two coil springs (14), which are radially one inside the other, are formed on the spring package (10), wherein the radially inner coil spring (14) is disposed in a depression (32) of the support element (12).

5. Spring package (10) according to Claim 4, **characterized in that** the radially inner coil spring (14) has the same length as or is longer than a further coil spring (14) of the spring package (10).

6. Spring package (10) according to one of Claims 4 to 5, **characterized in that** an intermediate face (30), which is disposed between two bearing faces (26) and forms an axial offset of the steps (24), is conical.

7. Torsion damper (40) for a clutch disc (38), comprising
- an input element (46);
- an output element (48);
- wherein the input element (46) and the output element (48) can be rotated in relation to one another about an axis of rotation; and
- wherein the input element (46) and the output element (48) are operatively connected to one another by way of a spring package (10),
**characterized in that** the spring package (10) is formed according to one of Claims 1 to 6.

8. Torsion damper (40) according to Claim 7, **characterized in that** the spring package (10) is biased in spring windows (54) of the input element (46) and of the output element (48).

9. Torsion damper (40) according to Claim 7 or 8, **characterized in that**, until a defined relative rotational angle between the input element (46) and the output element (48) has been reached, coil portions that are radially on the inside of the torsion damper (40) are tensioned to a greater extent than coil portions of the coil spring (14) that are radially on the outside.

10. Torsion damper (40) according to one of Claims 7 to 9, **characterized in that**, until a defined relative rotational angle between the input element (46) and the output element (48) has been reached, regions of the actuating face (28) of the coil spring (14) and of the bearing face (26) of the support element (12) that are radially on the inside are in bearing contact, and regions of the actuating face (28) of the coil spring (14) and of the bearing face (26) of the support element (12) that are radially on the outside are mutually spaced.

## Revendications

1. Ensemble de ressort (10) pour un amortisseur de torsion (40) d'un disque d'embrayage (38), comprenant
- un ressort hélicoïdal (14),
- un élément de soutien (12) sur lequel sont formées une portion en disque (18) et une portion en gradins (20) ,
- un gradin (24) destiné à commander le ressort hélicoïdal (14) étant formé sur la portion en gradins (20) ,
une surface de commande (28) du ressort hélicoïdal (14) étant associée à une surface d'appui (26) du gradin (24) de l'élément de soutien (12),
une première surface de centrage (34), laquelle correspond à une deuxième surface de centrage (36) du ressort hélicoïdal (14), étant formée sur le gradin (24) de la portion en gradins (20) en vue du centrage du ressort hélicoïdal (14), la première surface de centrage (34) étant formée au niveau d'une zone d'extrémité latérale de la surface d'appui (26),
**caractérisé en ce que** la première et la deuxième surface de centrage sont de configuration conique et, dans l'état détendu de l'ensemble de ressort (10), la deuxième surface de centrage (36) du ressort hélicoïdal (14) reposant contre la première surface de centrage (34) du gradin (24) de l'élément de soutien (12) et la surface de commande (28) du ressort hélicoïdal (14) et la surface d'appui (26) associée du gradin (24) présentant un écart axial.

2. Ensemble de ressort (10) selon la revendication 1, **caractérisé en ce que** dans l'état sollicité de l'ensemble de ressort (10), la deuxième surface de centrage (36) du ressort hélicoïdal (14) repose contre la première surface de centrage (34) du gradin (24) de l'élément de soutien (12) et/ou la surface de commande (28) du ressort hélicoïdal (14) et la surface d'appui (26) associée du gradin (24) reposent l'une contre l'autre.

3. Ensemble de ressort (10) selon l'une des revendications 1 ou 2, **caractérisé en ce que** dans l'état sollicité de l'ensemble de ressort (10), une spire d'extrémité axiale du ressort hélicoïdal (14) est élargie radialement ou réduite radialement par rapport aux autres spires du ressort hélicoïdal (14).

4. Ensemble de ressort (10) selon l'une des revendications 1 à 3, **caractérisé en ce qu'**au moins deux ressorts hélicoïdaux (14) sont formés au niveau de l'ensemble de ressort (10), lesquels sont disposés radialement l'un à l'intérieur de l'autre, le ressort hélicoïdal (14) radialement à l'intérieur étant disposé dans un creux (32) de l'élément de soutien (12).

5. Ensemble de ressort (10) selon la revendication 4, **caractérisé en ce que** le ressort hélicoïdal (14) radialement à l'intérieur est configuré avec la même longueur ou plus long qu'un ressort hélicoïdal (14) supplémentaire de l'ensemble de ressort (10).

6. Ensemble de ressort (10) selon l'une des revendications 4 à 5, **caractérisé en ce qu'**une surface intermédiaire (30), qui est disposée entre deux surfaces d'appui (26) et qui forme un décalage axial des gradins (24), est de configuration conique.

7. Amortisseur de torsion (40) pour un disque d'embrayage (38), comportant :
- un élément d'entrée (46),
- un élément de sortie (48),
- l'élément d'entrée (46) et l'élément de sortie (48) étant disposés de manière à pouvoir tourner l'un par rapport à l'autre autour d'un axe de rotation et
- l'élément d'entrée (46) et l'élément de sortie (48) étant reliés fonctionnellement l'un à l'autre par l'intermédiaire d'un ensemble de ressort (10),
**caractérisé en ce que** l'ensemble de ressort (10) est configuré selon l'une des revendications 1 à 6.

8. Amortisseur de torsion (40) selon la revendication 7, **caractérisé en ce que** l'ensemble de ressort (10) est disposé précontraint dans des fenêtres de ressort (54) de l'élément d'entrée (46) et de l'élément de sortie (48) .

9. Amortisseur de torsion (40) selon les revendications 7 ou 8, **caractérisé en ce que** jusqu'à ce qu'un angle de rotation relative défini soit atteint entre l'élément d'entrée (46) et l'élément de sortie (48), les portions de spire situées radialement à l'intérieur au niveau de l'amortisseur de torsion (40) sont contraintes plus fortement que les portions de spire situées à radialement à l'extérieur du ressort hélicoïdal (14).

10. Amortisseur de torsion (40) selon les revendications 7 à 9, **caractérisé en ce que** jusqu'à ce qu'un angle de rotation relative défini soit atteint entre l'élément d'entrée (46) et l'élément de sortie (48), les zones de la surface de commande (28) du ressort hélicoïdal (14) situées radialement à l'intérieur et la surface d'appui (26) de l'élément de soutien (12) se trouvent en contact d'appui et les zones de la surface de commande (28) du ressort hélicoïdal (14) situées radialement à l'extérieur et la surface d'appui (26) de l'élément de soutien (12) sont espacées les unes des autres.
